# EUROPÄISCHE PATENTSCHRIFT

(11) **EP 4 402 792 B1**
(45) Veröffentlichungstag und Bekanntmachung des Hinweises auf die Patenterteilung: **05.03.2025**
(21) Anmeldenummer: 22803009.4
(22) Anmeldetag: 19.10.2022
(51) Int. Cl.: G06F 3/03, H02P 6/00, H02P 25/064, G06F 3/0354, G06F 3/01

(54) **VERFAHREN ZUM BETREIBEN EINES PLANARANTRIEBSSYSTEMS UND PLANARANTRIEBSSYSTEM**
METHOD FOR OPERATING A PLANAR DRIVE SYSTEM, AND PLANAR DRIVE SYSTEM
PROCÉDÉ DESTINÉ À FAIRE FONCTIONNER UN SYSTÈME D'ENTRAÎNEMENT PLAN, ET SYSTÈME D'ENTRAÎNEMENT PLAN ASSOCIÉ

(30) Priorität: 19.10.2021 DE 102021127039
(43) Veröffentlichungstag der Anmeldung: 24.07.2024
(73) Patentinhaber: Beckhoff Automation GmbH, 33415 Verl (DE)
(72) Erfinder: BECKHOFF, Johannes, 33758 Schloß Holte-Stukenbrock (DE); SCHULTE, Felix, 33397 Rietberg (DE); ACHTERBERG, Jan, 47249 Duisburg (DE); PRUESSMEIER, Uwe, 32657 Lemgo (DE); BENTFELD, Lukas, 33129 Delbrück (DE)
(74) Vertreter: Patentanwaltskanzlei WILHELM & BECK
(86) Internationale Anmeldenummer: PCT/EP2022/079096
(87) Internationale Veröffentlichungsnummer: WO 2023/066998

(56) Entgegenhaltungen:
- EP-A1- 2 905 804
- DE-A1- 102018 006 259
- US-A1- 2014 265 690
- US-A1- 2019 348 898
- PERLIN KEN ET AL: "Madgets : actuating widgets on interactive tabletops", UIST '10 : PROCEEDINGS OF THE TWENTY-THIRD ANNUAL ACM SYMPOSIUM ON USER INTERFACE SOFTWARE AND TECHNOLOGY, 3 October 2010 (2010-10-03), US, pages 293 - 302, XP093020392, ISBN: 978-1-4503-0271-5, Retrieved from the Internet <URL:https://dl.acm.org/doi/pdf/10.1145/1866029.1866075> [retrieved on 20230202], DOI: 10.1145/1866029.1866075

## Beschreibung

Die Erfindung betrifft ein Verfahren zum Betreiben eines Planarantriebssystems und ein Planarantriebssystem.

Planarantriebssysteme können unter anderem in der Automatisierungstechnik, insbesondere der Fertigungstechnik, der Handhabungstechnik und der Verfahrenstechnik, eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulenanordnungen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulenanordnungen und rechteckigen und längsgestreckten Magnetanordnungen des Läufers bekannt. Ein solches Planarantriebssystem wird beispielsweise in der Offenlegungsschrift DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulenanordnungen angeordnet sind, parallel zur Statorfläche frei beweglich und senkrecht zur Statorfläche zumindest in verschiedenen Abständen zur Statorfläche bewegt werden kann. Ferner ist ein solches Planarantriebssystem in der Lage, den Läufer um einige Grad zu kippen und um einige Grad zu rotieren. Die letztgenannten Bewegungen sind dabei oberhalb von beliebigen Punkten der Statorfläche durchführbar. Der Läufer kann insbesondere um bis zu 20° aus einer Normallage heraus rotiert werden.

Zur Steuerung eines solchen Planarantriebssystems dient eine Steuereinheit, die vorgegebene Trajektorien der Läufer in eine Bestromungsinformation der Spulenanordnungen umrechnet und anschließend ein Bestromen der Spulenanordnungen steuert. Dabei können mittels Positionssensoren ermittelte Ist-Positionen der Läufer zur Regelung der Ströme der Spulenanordnungen genutzt werden. Eingaben an das Planarantriebssystem und Ausgaben vom Planarantriebssystem erfolgen über die Steuereinheit. Die Steuereinheit kann beispielsweise eine Benutzerschnittstelle wie beispielsweise eine Tastatur, eine Computermaus und einen Bildschirm zur Eingabe und zur Ausgabe von Informationen aufweisen, zur haptischen Eingabe siehe auch PERLIN KEN ET AL: "Madgets : actuating widgets on interactive tabletops",UIST '10 : PROCEEDINGS OF THE TWENTY-THIRD ANNUAL ACM SYMPOSIUM ON USER INTERFACE SOFTWARE AND TECHNOLOGY, 3. Oktober 2010 (2010-10-03), Seiten 293-302, XP093020392,US DOI: 10.1145/1866029.1866075.

Es ist eine Aufgabe der Erfindung, ein Verfahren mit einer alternativen Ein- und Ausgabemöglichkeit für ein Planarantriebssystem bereitzustellen. Eine weitere Aufgabe ist es, ein Planarantriebssystem mit einer alternativen Ein- und Ausgabemöglichkeit bereitzustellen Diese Aufgaben werden mit dem Verfahren und dem Planarantriebssystem der unabhängigen Patentansprüche gelöst. Vorteilhafte Ausgestaltungen sind in den abhängigen Patentansprüchen angegeben.

Ein Planarantriebssystem umfasst zumindest ein Statormodul und einen Läufer, wobei das Statormodul zumindest eine Statoreinheit mit zumindest einer Spulenanordnung umfasst. Die Spulenanordnung kann bestromt werden und ist eingerichtet, aufgrund einer Bestromung ein Statormagnetfeld oberhalb einer Statorfläche zu erzeugen. Das Statormodul umfasst ferner zumindest einen Magnetfeldsensor. Der Läufer weist eine Magnetanordnung auf kann mittels einer Wechselwirkung zwischen dem Statormagnetfeld und einem Läufermagnetfeld der Magnetanordnung oberhalb der Statorfläche bewegt werden. Der Läufer kann ferner als Eingabeinstrument und/oder als Ausgabeinstrument verwendet werden. Eine Steuereinheit ist eingerichtet, eine Position des mittels des Magnetfeldsensors erfassten Läufermagnetfelds mit einer aufgrund einer Bestromung der Spulenanordnungen erwarteten Position zu vergleichen und eine Abweichung der Position von der erwarteten Position als externe Bewegung zu ermitteln und dadurch eine Eingabe zu erkennen. Alternativ oder zusätzlich ist die Steuereinheit eingerichtet, eine Ausgabe über eine vorgegebene Bewegung des Läufers zu steuern und dazu die Spulenanordnungen derart zu bestromen, dass sich der Läufer wie durch die vorgegebene Bewegung definiert bewegt.

Der Läufer des Planarantriebssystems dient also als Eingabeinstrument und/oder als Ausgabeinstrument. Wird das Planarantriebssystem in der Automatisierungstechnik, insbesondere der Fertigungstechnik, der Handhabungstechnik und der Verfahrenstechnik, eingesetzt, so können Personen, die das Planarantriebssystem bedienen und/oder überwachen, ihrer Aufgabe einfacher nachkommen. Beispielsweise können Personen ohne Kenntnisse über eine Programmierung der Steuereinheit Bewegung des Läufers verändern oder mittels Läuferbewegungen Eingaben an die Steuereinheit durchführen. Dadurch können beispielsweise Programmierhilfen für die Steuerung entfallen, kurzfristige Anpassungen in einem Produktionsablauf durchgeführt werden oder Transportleistungen bedarfsgerecht bereitgestellt werden.

Ferner können Ausgaben direkt durch den Läufer erfolgen, so dass keine Überwachung eines Bildschirms notwendig ist und ein Blick nicht vom Planarantriebssystem abgewendet werden muss.

Ein Eingabeinstrument für eine Steuereinheit eine Planarantriebssystems dient beispielweise dazu, dass Steuerbefehle zur Steuerung des Planarantriebssystems, insbesondere zur Steuerung der Bewegung des Läufers von einem Maschinenbediener an die Steuereinheit übermittelt werden. Aus dem Stand der Technik sind Eingabeinstrumente in Form von Computertastaturen, Computermäusen, Touch-Displays oder Ähnlichem bekannt. Es kann erfindungsgemäß insbesondere vorgesehen sein, dass eine Eingabe an die Steuereinheit mittels des Läufers als Eingabeinstrument erfolgt. Ein Ausgabeinstrument für eine Steuereinheit eine Planarantriebssystems dient beispielweise dazu, dass Zustands- oder Prozessinformationen der Steuerung des Planarantriebssystems, insbesondere in Bezug auf die Steuerung der Bewegung des Läufers von der Steuereinheit an einen Maschinenbediener übermittelt werden. Aus dem Stand der Technik sind Ausgabeinstrumente in Form von Computerbildschirmen, Leuchtsignalen oder Ähnlichem bekannt. Eine Ausgabe von der Steuereinheit kann über den Läufer als Ausgabeinstrument erfolgen. Der Läufer des Planarantriebssystems kann also zur Mensch-Maschine-Kommunikation oder zur Maschine-Mensch-Kommunikation eingesetzt werden. Der Läufer kann Signale aus seiner Umwelt, insbesondere haptische Signale gegebenenfalls erzeugt durch einen Maschinenbediener, beispielsweise in Form eines Antippens des Läufers, erfassen. Der Läufer dient in diesem Fall als Eingabeinstrument für die Mensch-Maschine-Kommunikation, wodurch ein Informationsfluss vom Menschen zur Maschine ermöglicht wird. Ebenso kann der Läufer auch zur Ausgabe von Informationen, beispielsweise von Statusinformationen genutzt werden, wodurch ein Informationsfluss von der Maschine zum Menschen ermöglicht wird. Dabei kann der Läufer bestimmte Bewegungen ausführen um dem Maschinenbediener einen Status mitzuteilen. Zudem kann der Läufer mit weiteren Aktoren, beispielsweise Leuchtmitteln, versehen werden, welche zusätzlich oder alternativ eine Informationsausgabe ermöglichen. Der Läufer ist also auch ein Ausgabeinstrument für die Maschine-Mensch-Kommunikation.

Die Abweichung der Position von der erwarteten Position kann dabei einen Positionsschleppfehler umfassen, also eine reale Abweichung der Position. Ferner kann die Abweichung der Position von der erwarteten Position alternativ oder zusätzlich zur Berechnung einer auf den Läufer wirkenden externen Kraft verwendet werden, wenn mittels der Spulenanordnungen der Läufer auf seiner Position gehalten wird und aufgrund der externen Bewegung eine zusätzliche Bestromung der Spulenanordnungen erfolgt, um die Position einzuhalten. Aus der Höhe der Bestromung lassen sich dann Rückschlüsse auf die externe Kraft ziehen.

Ein Verfahren zum Betreiben des Planarantriebssystems, bei dem der Läufer als Eingabeinstrument verwendet werden kann, wird erfindungsgemäß folgendermaßen umgesetzt. Eine Eingabe wird dadurch erkannt, dass eine Position des Läufermagnetfelds mittels des Magnetfeldsensors erfasst und mit einer aufgrund einer Bestromung der Spulenanordnungen erwarteten Position verglichen wird. Eine Abweichung der Position von der erwarteten Position wird als externe Bewegung ermittelt.

Ein Abweichen der Position von der erwarteten Position ist typischerweise darauf zurückzuführen, dass der Läufer innerhalb des Planarantriebssystems bewegt wurde, wobei keine dies verursachende Bestromung der Spulenanordnungen erfolgt ist. Somit kann dies als Eingabe erkannt und aufgrund der Eingabe weitere Funktionen des Planarantriebssystems gesteuert werden.

In einer Ausführungsform des Verfahrens wird beim Vergleich zwischen der Position und der erwarteten Position eine Bewegung parallel zur Statorfläche erkannt. Die Eingabe kann dabei also derart erfolgen, dass der Läufer parallel zur Statorfläche bewegt wird. Beispielsweise kann mit einer Bewegung in eine Richtung parallel zur Statorfläche eine Bewegung des Läufers in diese Richtung ausgelöst werden, indem aufgrund der Eingabe folgt, dass der Läufer mittels der Spulenanordnungen in diese Richtung bewegt werden soll. Die Bewegung parallel zur Statorfläche ergibt dabei eine erste Eingabemöglichkeit.

In einer Ausführungsform des Verfahrens wird beim Vergleich zwischen der Position und der erwarteten Position eine Bewegung senkrecht zur Statorfläche erkannt. Dies kann beispielsweise genutzt werden, um Festzulegen, dass der Läufer zunächst nicht weiterbewegt werden soll und erst nach einer zweiten Bewegung, die als Eingabe identifiziert wird, senkrecht zur Statorfläche wird der Läufer wieder freigegeben und parallel zur Statorfläche mittels den Spulenanordnungen bewegt. Die Bewegung senkrecht zur Statorfläche ergibt dabei eine zweite Eingabemöglichkeit.

In einer Ausführungsform des Verfahrens wird beim Vergleich zwischen der Position und der erwarteten Position eine Rotation des Läufers um eine erste Achse parallel zur Statorfläche erkannt. Die Rotation um die erste Achse ergibt dabei eine dritte Eingabemöglichkeit.

In einer Ausführungsform des Verfahrens wird beim Vergleich zwischen der Position und der erwarteten Position eine Rotation des Läufers um eine zweite Achse senkrecht zur Statorfläche erkannt. Die Rotation um die zweite Achse ergibt dabei eine vierte Eingabemöglichkeit.

Die erste Eingabemöglichkeit, zweite Eingabemöglichkeit, dritte Eingabemöglichkeit und vierte Eingabemöglichkeit können dabei auch parallel verwendet werden, wenn entsprechende Abweichungen der Position von der erwarteten Position ausgewertet werden. Dabei können die einzelnen Eingabemöglichkeiten jeweils den Positionsschleppfehler und/oder die Berechnung der auf den Läufer wirkenden externen Kraft umfassen. Ferner sind beliebige Kombinationen aus Positionsschleppfehler und/oder der Berechnung der auf den Läufer wirkenden externen Kraft für verschiedene Eingabemöglichkeiten denkbar.

In einer Ausführungsform des Verfahrens werden anhand der externen Bewegung eine oder mehrere Spulenanordnungen derart bestromt, dass der Läufer und/oder ein weiterer Läufer eine vorbestimmte Bewegung durchführt. Dies kann beispielsweise derart erfolgen, dass ein Läufer von einer Bedienperson in verschiedene Richtungen bewegt werden kann und der weitere Läufer durch die Bestromung der Spulenanordnungen in diese Richtungen bewegt wird. Der Läufer dient dabei als eine Art Fernsteuerung für den weiteren Läufer.

In einer Ausführungsform des Verfahrens wird zunächst der Läufer mittels der Wechselwirkung zwischen Statormagnetfeld und Läufermagnetfeld in einer vorbestimmten Höhe gehalten und die Bewegung des Läufers parallel zur Statorfläche entlang einer Bewegungsbahn als externe Bewegung ausgeführt. Anschließend bewegt sich der Läufer mittels der Bestromung der Spulenanordnungen entlang der Bewegungsbahn. Dadurch kann beispielsweise eine komplexe Bewegungsbahn für den Läufer durch eine Bedienperson eingegeben werden, ohne dass die Bedienperson über tiefergehende Programmierkenntnisse verfügen muss.

In einer Ausführungsform des Verfahrens wird anhand der externen Bewegung des Läufers ermittelt, dass der Läufer von der Statorfläche entfernt wird. Die Bestromung der Spulenanordnungen erfolgt derart, dass der Läufer zur Statorfläche hin bewegt und mit einer magnetischen Kraft angezogen wird. Dies kann beispielsweise dem Diebstahlschutz der Läufer dienen, da ein unbefugtes Entfernen des Läufers unterbunden werden kann. In dieser Ausführungsform kann insbesondere die auf den Läufer wirkende Kraft ausgewertet werden und die magnetische Kraft, die den Läufer zur Statorfläche hin anzieht, erst dann erzeugt werden, wenn die auf den Läufer wirkende Kraft ermittelt aus dem Vergleich der Position mit der erwarteten Position einen vorgegebenen Wert übersteigt.

Beim Auswerten der auf den Läufer wirkenden Kraft ermittelt aus dem Vergleich der Position mit der erwarteten Position kann auch eine Bewegung des Läufers hin zu einem Anschlag erkannt werden, wobei dann die Berührung des Anschlags als Eingabe genutzt werden kann.

Alternativ oder zusätzlich zur Eingabe über den Läufer können auch weitere Eingabeeinheiten vorgesehen sein. Beispielsweise kann die Eingabe über einen berührempfindlichen Bildschirm, einen 6D-Stift und/oder eine Sensorik zur Erfassung von menschlichem Verhalten erfolgen, wobei die Sensorik zur Erfassung von menschlichem Verhalten beispielsweise ein Mikrophon und eine Spracherkennung zur Eingabe von Sprachbefehlen oder eine Kamera mit einer Bilderkennung umfassen kann.

Ein nicht zur Erfindung gehörendes Verfahren zum Betreiben des Planarantriebssystems, bei dem der Läufer als Ausgabeinstrument verwendet werden kann, ist folgendermaßen durchführbar. Eine Ausgabe erfolgt über eine vorgegebene Bewegung des Läufers, wobei die Spulenanordnungen derart bestromt werden, dass sich der Läufer wie durch die vorgegebene Bewegung definiert bewegt. Durch die vorgegebene Bewegung können Informationen an eine Bedienperson ausgegeben werden.

In einer Ausführungsform des Verfahrens umfasst die vorgegebene Bewegung des Läufers bei der Ausgabe eine Hin-und-Her-Bewegung in einer Richtung parallel zur Statorfläche. Dies ermöglicht eine erste Ausgabemöglichkeit.

In einer Ausführungsform des Verfahrens umfasst die vorgegebene Bewegung des Läufers bei der Ausgabe eine Hin-und-Her-Bewegung in einer Richtung senkrecht zur Statorfläche. Dies ermöglicht eine erste Ausgabemöglichkeit.

In einer Ausführungsform des Verfahrens umfasst die vorgegebene Bewegung des Läufers bei der Ausgabe eine Rotationsschwingungsbewegung um eine erste Achse parallel zur Statorfläche. Dies ermöglicht eine dritte Ausgabemöglichkeit.

In einer Ausführungsform des Verfahrens weist die Rotationsschwingung eine Frequenz auf, derart dass durch die Rotationsschwingung ein hörbarer Ton, insbesondere ein Ton im Frequenzbereich zwischen 20 Hertz und 20 Kilohertz, entsteht. Dadurch kann die vierte Ausgabemöglichkeit auch eine akustische Ausgabemöglichkeit sein.

Ein Beispiel des Verfahrens umfasst die vorgegebene Bewegung des Läufers bei der Ausgabe eine Rotationsschwingungsbewegung um eine zweite Achse senkrecht zur Statorfläche. Dies ermöglicht eine fünfte Ausgabemöglichkeit.

Alternativ oder zusätzlich zur Ausgabe über den Läufer können auch weitere Ausgabeeinheiten vorgesehen sein. Beispielsweise kann die Ausgabe mittels auf dem Läufer angeordneten Ausgabeeinheiten wie beispielsweise Lichtsignalen oder Lautsprechern erfolgen, wobei gegebenenfalls eine Datenübertragung und eine Energieübertragung vom Statormodul zum Läufer erfolgt und der Läufer eine entsprechende Steuerung aufweist. Dabei können unterschiedliche Lichtsignale, wie beispielsweise unterschiedliche Farben, und/oder unterschiedliche Töne beziehungsweise Tonfolgen für unterschiedliche Ausgaben verwendet werden.

Die Erfindung wird anhand der beigefügten Figuren näher erläutert. Hierbei zeigen:
- Fig. 1: ein Planarantriebssystem;
- Fig. 2: ein Ablaufdiagramm zum Erkennen einer Eingabe;
- Fig. 3: eine Draufsicht auf ein Planarantriebssystem;
- Fig. 4: eine Seitenansicht eines Planarantriebssystems;
- Fig.5: eine Seitenansicht eines Planarantriebssystem;
- Fig. 6: eine Draufsicht auf ein Planarantriebssystem;
- Fig. 7: eine Draufsicht auf ein Planarantriebssystems:
- Fig. 8: eine Seitenansicht eines Planarantriebssystems;
- Fig. 9: ein Ablaufdiagramm zum Durchführen einer Ausgabe;
- Fig. 10: eine isometrische Ansicht eines Planarantriebssystems; und
- Fig. 11: eine Seitenansicht eines Planarantriebssystems.

Im Folgenden können für gleiche Merkmale gleiche Bezugszeichen verwendet werden. Weiter kann es aus Gründen der Übersichtlichkeit vorgesehen sein, dass nicht in jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

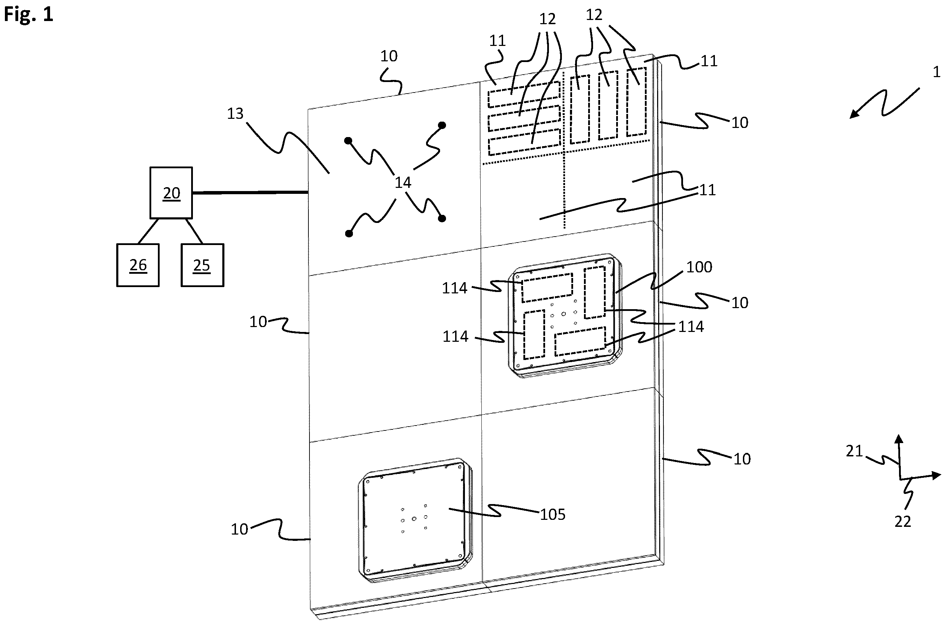

Figur 1 zeigt ein Planarantriebssystem 1 mit sechs Statormodulen 10, wobei die Statormodule 10 derart angeordnet sind, dass ein Rechteck von zwei auf drei Statormodulen 10 gebildet ist. Auch andere Anordnungen der Statormodule 10 sind denkbar, es können auch mehr oder weniger als sechs Statormodule 10 angeordnet werden. Im oben rechts dargestellten Statormodul 10 ist ein Innenleben des Statormoduls 10 skizziert, wobei das Statormodul 10 vier Statoreinheiten 11 umfasst, wobei die vier Statoreinheiten 11 innerhalb eines Statormoduls 10 in einer quadratischen zwei-auf-zwei-Anordnung angeordnet sind. Ferner ist für zwei Statoreinheiten 11 dargestellt, dass die Statoreinheiten 11 Spulenanordnungen 12 umfassen, wobei die Spulenanordnungen 12 mit unterschiedlicher Ausrichtung dargestellt sind. Die Spulenanordnungen 12 dienen zum Erzeugen eines Statormagnetfelds. Die Spulenanordnungen 12 sind in der dargestellten Ausführungsform als rechteckige und längsgestreckte Spulenanordnungen 12 ausgestaltet. In jeder Statoreinheit 11 der Statormodule 10 sind jeweils drei einzelne, rechteckige und längsgestreckte Spulen einer Spulenanordnung 12 dargestellt. Ebenso könnte bei einer nicht dargestellten Ausführungsform eine andere Anzahl an einzelnen rechteckigen und längsgestreckten Spulen eine Spulenanordnung 12 bilden. Dabei orientiert sich ihre Längserstreckung parallel zu einer der Kanten der jeweiligen Statoreinheit 11. Unterhalb jeder der dargestellten Spulenanordnung 12 sind weitere Spulen vorhanden, die in Bezug auf ihre Längserstreckung eine um 90° gedrehte Orientierung aufweisen. Dieses Raster aus längserstreckten und rechteckigen Spulen einer Spulenanordnung 12 kann mehrfach übereinander ausgebildet sein. Real sind weder Statoreinheiten 11 noch Spulenanordnungen 12 sichtbar, da sie durch ein Gehäuse des Statormoduls 10 umgeben sind. Die sechs Statormodule 10 bilden eine zusammenhängende Statorfläche 13 oberhalb der Statoreinheiten 11. Ferner ist ein Läufer 100 angeordnet, wobei der Läufer eine Mehrzahl von Magneteinheiten 114 zum Erzeugen eines Läufermagnetfelds aufweist. Die Spulenanordnungen 12 können bei entsprechender Bestromung mit den Magneteinheiten 114 wechselwirken und dadurch den Läufer 100 innerhalb des Planarantriebssystems 1 oberhalb der Statorfläche 13 bewegen. Durch die Statorfläche 13 ist also eine Bewegungsebene für den Läufer 100 definiert. Die Darstellung in Figur 1 ist vereinfacht, da in jeder Statoreinheit 11 mehrere Spulenanordnungen 12 angeordnet sind, die jeweils im 90° Winkel zueinanderstehen, jedoch nur jeweils eine Lage von Spulenanordnungen 12 dargestellt ist. Die Magneteinheiten 114 sind innerhalb des Läufers 100 umlaufend angeordnet und können jeweils mit den Spulenanordnungen 12 wechselwirken, um den Läufer 100 zu bewegen. Die Bewegungen des Läufers können dabei insbesondere in einer durch eine erste Richtung 21 und eine zweite Richtung 22 aufgespannte Ebene erfolgen. Ferner ist eine Überlagerung dieser Bewegungen möglich, so dass der Läufer 100 in alle Richtungen parallel zur Statorfläche 13 bewegt werden kann. Weiterhin ist ein weiterer Läufer 105 dargestellt, wobei der weitere Läufer 105 analog zum Läufer 100 aufgebaut ist und somit ebenfalls mit den Spulenanordnungen 12 zur Erzeugung einer Bewegung des weiteren Läufers 105 wechselwirken kann. Die Anordnung von vier Statoreinheiten 11 innerhalb eines Statormoduls 10 entspricht den von der Anmelderin unter dem Namen XPlanar vertriebenen Statormodulen 10 für ein Planarantriebssystem 1. Es kann alternativ vorgesehen, auch mehr oder weniger Statoreinheiten 11 innerhalb eines Statormoduls 10 anzuordnen. Beispielsweise kann jedes Statormodul 10 nur eine Statoreinheit 11 umfassen oder mehr als vier Statoreinheiten 11 umfassen.

Ebenfalls in Figur 1 dargestellt ist eine Steuereinheit 20, die mit einem der Statormodule 10 verbunden ist. Dabei kann vorgesehen sein, dass die Statormodule 10 Kommunikationssignale untereinander weitergeben können. Alternativ kann auch jedes Statormodul 10 mit der Steuereinheit 20 verbunden sein (nicht in Figur 1 gezeigt). Die Steuereinheit 20 ist eingerichtet, Steuerbefehle an die Statormodule 10 auszugeben, wobei die Statormodule 10 eingerichtet sind, die Spulenanordnungen 12 anhand der Steuersignale zu bestromen und dadurch eine Bewegung des Läufers 100 parallel zur Statorfläche 13 zu steuern. Die Spulenanordnungen 12 können ferner derart bestromt werden, dass der Läufer 100 senkrecht zur Statorfläche 13 bewegt wird.

Weiter in Figur 1 dargestellt sind Magnetfeldsensoren 14 in einem der Statormodule 10, wobei die anderen Statormodule 10 ebenfalls Magnetfeldsensoren 14 aufweisen können. Mittels der Magnetfeldsensoren 14 kann eine Position des Läufers 100 beziehungsweise des weiteren Läufers 105 bestimmt und an die Steuereinheit 20 weitergegeben werden. Die Magnetfeldsensoren 14 können beispielsweise als Hall-Sensoren, insbesondere als 3D-Hall-Sensoren ausgestaltet sein.

Das in Figur 1 gezeigte Planarantriebssystem 1 kann in der Automatisierungstechnik, insbesondere der Fertigungstechnik, der Handhabungstechnik und der Verfahrenstechnik, eingesetzt werden, um Objekte zu transportieren. Dabei können die Objekte beispielsweise auf dem Läufer 100 angeordnet sein.

Der Läufer 100 kann in dem in Figur 1 gezeigten Planarantriebssystem 1 als Eingabeinstrument dienen. In diesem Fall ist die Steuereinheit 20 eingerichtet, eine Position des mittels eines Magnetfeldsensors 14 erfassten Läufermagnetfelds mit einer aufgrund einer Bestromung der Spulenanordnungen 12 erwarteten Position zu vergleichen und eine Abweichung der Position von der erwarteten Position als externe Bewegung zu ermitteln und dadurch eine Eingabe zu erkennen. Dabei kann insbesondere vorgesehen sein, dass Angriffspunkt, Richtung und Betrag einer von außen auf den Läufer 100 einwirkenden Kraft mithilfe der beschriebenen Abweichungserkennung detektiert wird. Die Steuereinheit 20 kann den so ermittelten Parametern ein bestimmtes Ereignis zuordnen. Die Abweichung zwischen der Position und der erwarteten Position kann auch als Positionsschleppfehler bezeichnet werden. Die Steuereinheit 20 kann die Positionsschleppfehler für jede einzelne Bewegungsachse jedes einzelnen Läufers 100, 105 detektieren, wobei die Bewegungsachsen Linearbewegungen parallel zur ersten Richtung 21 und der zweiten Richtung 22 sowie zu einer darauf senkrechten dritten Richtung sowie Rotationen um Rotationsachsen parallel zur ersten Richtung 21 und der zweiten Richtung 22 sowie zu einer darauf senkrechten dritten Richtung umfassen können. Zur Ermittlung des Positionsschleppfehlers können beispielsweise die Magnetfeldsensoren 14 genutzt werden und das durch die Magneteinheiten 114 verursachte Läufermagnetfeld ausgewertet werden.

Üblicherweise ist das Ziel eines geregelten Systems, den Positionsschleppfehler zu minimieren. Dies kann grundsätzlich auch beim beschriebenen Planarantriebssystem 1 umgesetzt sein. Wird ein Positionsschleppfehler von der Steuereinheit detektiert, wird der in den Spulengruppen 12 unterhalb des relevanten Läufers 100, 105 eingestellte Strom verändert. Aus diesem in den Spulengruppen 12 eingestellten Strom kann auf die resultierenden Kräfte und Momente auf den betreffenden Läufer 100, 105 rückgeschlossen werden. Das System ist also nicht nur in der Lage, eine Einwirkung auf den Läufer von außen über den Positionsschleppfehler zu erkennen. Das Planarantriebssystem 1 beziehungsweise die Steuereinheit 20 ist also nicht nur in der Lage, den Schleppfehler als solches zu bestimmen, sondern kann auch den Betrag der einwirkenden Kraft über die Anpassung der Spulenströme ermitteln. Das Planarantriebssystem 1 beziehungsweise die Steuereinheit 20 ist zudem eingerichtet, aus den vorgenannten Parametern die Richtung der angreifenden Kraft zu ermitteln.

Der Läufer 100 kann in dem in Figur 1 gezeigten Planarantriebssystem 1 als Ausgabeinstrument dienen. In diesem Fall ist die Steuereinheit 20 eingerichtet, eine Ausgabe über eine vorgegebene Bewegung des Läufers 100 zu steuern und dazu die Spulenanordnungen 12 derart zu bestromen, dass sich der Läufer 100 wie durch die vorgegebene Bewegung definiert bewegt.

In Figur 1 ist zusätzlich eine optionale Eingabeeinheit 25 dargestellt, die mit der Steuereinheit 20 verbunden ist. Alternativ oder zusätzlich zur Eingabe über den Läufer 100 können auch Eingaben mittels der Eingabeeinheit 25 vorgesehen sein. Beispielsweise kann die Eingabe über einen berührempfindlichen Bildschirm, einen 6D-Stift und/oder eine Sensorik zur Erfassung von menschlichem Verhalten erfolgen, wobei die Sensorik zur Erfassung von menschlichem Verhalten beispielsweise ein Mikrophon und eine Spracherkennung zur Eingabe von Sprachbefehlen oder eine Kamera mit einer Bilderkennung umfassen kann. Der berührempfindliche Bildschirm, der 6D-Stift und/oder die Sensorik zur Erfassung von menschlichem Verhalten kann dabei innerhalb der Eingabeeinheit 25 angeordnet sein.

In Figur 1 ist zusätzlich eine optionale Ausgabeeinheit 26 dargestellt, die mit der Steuereinheit 20 verbunden ist. Ferner kann eine Ausgabeeinheit 26 auch auf dem Läufer 100 angeordnet sein (nicht in Figur 1 gezeigt). Alternativ oder zusätzlich zur Ausgabe über den Läufer 100 kann eine Ausgabe auch über die Ausgabeeinheit 26 erfolgen. Beispielsweise kann die Ausgabe mittels auf dem Läufer 100 angeordneten Ausgabeeinheiten 26 wie beispielsweise Lichtsignalen oder Lautsprechern erfolgen, wobei gegebenenfalls eine Datenübertragung und eine Energieübertragung vom Statormodul 10 zum Läufer 100 erfolgt und der Läufer 100 eine entsprechende Steuerung aufweist. Dabei können unterschiedliche Lichtsignale, wie beispielsweise unterschiedliche Farben, und/oder unterschiedliche Töne beziehungsweise Tonfolgen für unterschiedliche Ausgaben verwendet werden.

Die weiteren Figuren enthalten gegebenenfalls die im Zusammenhang mit Figur 1 erläuterten Bezugszeichen. In der weiteren Beschreibung wird gegebenenfalls auf diese Bezugszeichen nicht weiter eingegangen, da die mit diesen Bezugszeichen beschriebenen Teile des Planarantriebssystems 1 im Zusammenhang mit Figur 1 erläutert wurden.

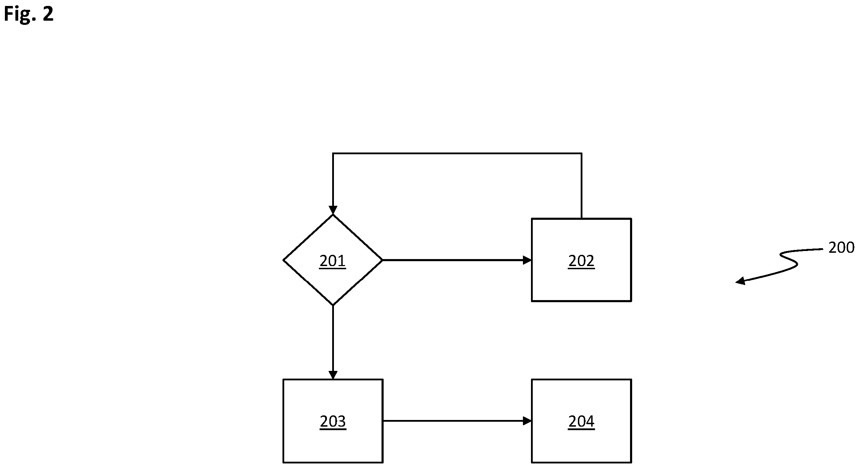

Figur 2 zeigt ein erstes Ablaufdiagramm 200 eines Verfahrens zum Betreiben eines Planarantriebssystems 1, bei dem eine Eingabe mittels eines Läufers 100 erkannt wird. In einem Entscheidungsschritt 201 wird eine Abweichung der Position des Läufers 100 von einer aufgrund der Bestromung der Spuleneinheiten 12 erwarteten Position des Läufers 100 bestimmt. Im Entscheidungsschritt 201 wird also insbesondere ermittelt, ob eine mittels des Magnetfeldsensors 14 erfasste Position des Läufermagnetfelds von einer aufgrund einer Bestromung der Spulenanordnungen 12 erwarteten Position des Läufermagnetfelds verglichen wird. Stimmen diese Positionen überein, wird ein Regelbetrieb 202 ohne Eingabe durchgeführt und nach einer vorgegebenen Zeit wieder der Entscheidungsschritt 201 durchgeführt. Weicht im Entscheidungsschritt 201 die mittels des Magnetfeldsensors 14 erfasste Position des Läufermagnetfelds von der aufgrund einer Bestromung der Spulenanordnungen 12 erwarteten Position des Läufermagnetfelds ab, so wird im Erkennungsschritt 203 eine Eingabe erkannt. In einem optionalen Reaktionsschritt 204 kann dann eine Reaktion erfolgen, wobei die Reaktion eine Bestromung der Antriebsspulen 12 derart, dass eine bestimmte Bewegung des Läufers 100 ausgeführt wird, sein kann.

Die Abweichung der Position von der erwarteten Position kann dabei einen Positionsschleppfehler umfassen, also eine reale Abweichung der Position. Ferner kann die Abweichung der Position von der erwarteten Position alternativ oder zusätzlich zur Berechnung einer auf den Läufer 100 wirkenden externen Kraft verwendet werden, wenn mittels der Spulenanordnungen 12 der Läufer 100 auf seiner Position gehalten wird und aufgrund der externen Bewegung eine zusätzliche Bestromung der Spulenanordnungen 12 erfolgt, um die Position einzuhalten. Aus der Höhe der Bestromung lassen sich dann Rückschlüsse auf die externe Kraft ziehen. Dies kann insbesondere im Entscheidungsschritt 201 durchgeführt werden.

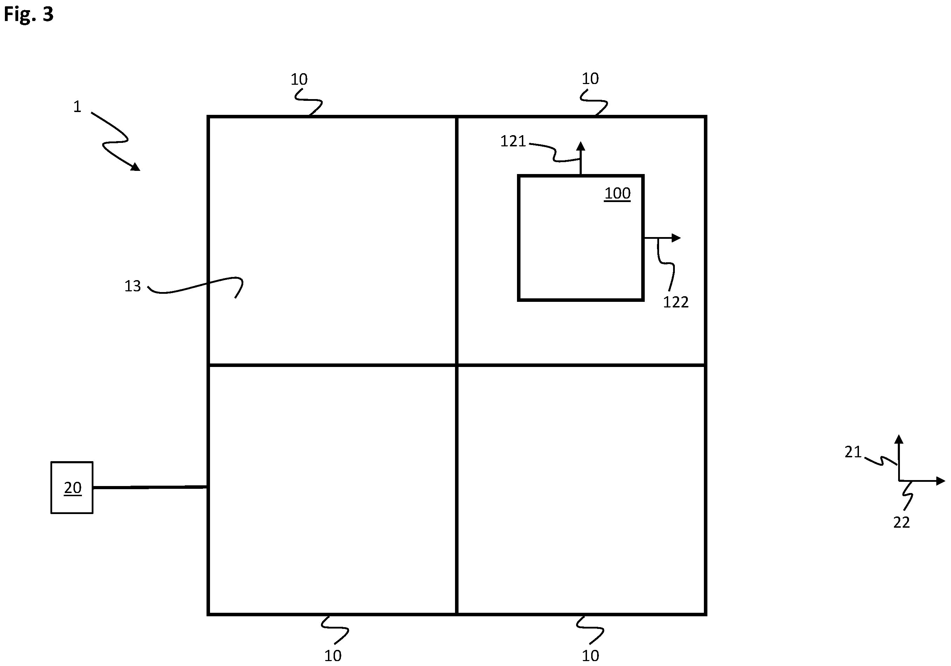

Figur 3 zeigt eine Draufsicht auf ein Planarantriebssystem 1, bei dem der Läufer 100 in die erste Richtung 21 und die zweite Richtung 22 mittels der Antriebsspulen 12 bewegt werden kann. Die Steuereinheit 20 ist ferner eingerichtet, mittels der Magnetfeldsensoren 14 eine Position des Läufermagnetfelds zu erfassen und mit einer aufgrund einer Bestromung der Spulenanordnungen 12 erwarteten Position zu vergleichen und aus einer Abweichung der Position von der erwarteten Position eine externe Bewegung in eine erste externe Bewegungsrichtung 121 und eine zweite externe Bewegungsrichtung 122 zu ermitteln. Die erste externe Bewegungsrichtung 121 ist dabei in dieselbe Richtung orientiert wie die erste Richtung 21 und die zweite externe Bewegungsrichtung 122 ist in dieselbe Richtung orientiert wie die zweite Richtung 22. Die Abweichung kann wieder als Positionsschleppfehler oder als Kraft ermittelt werden.

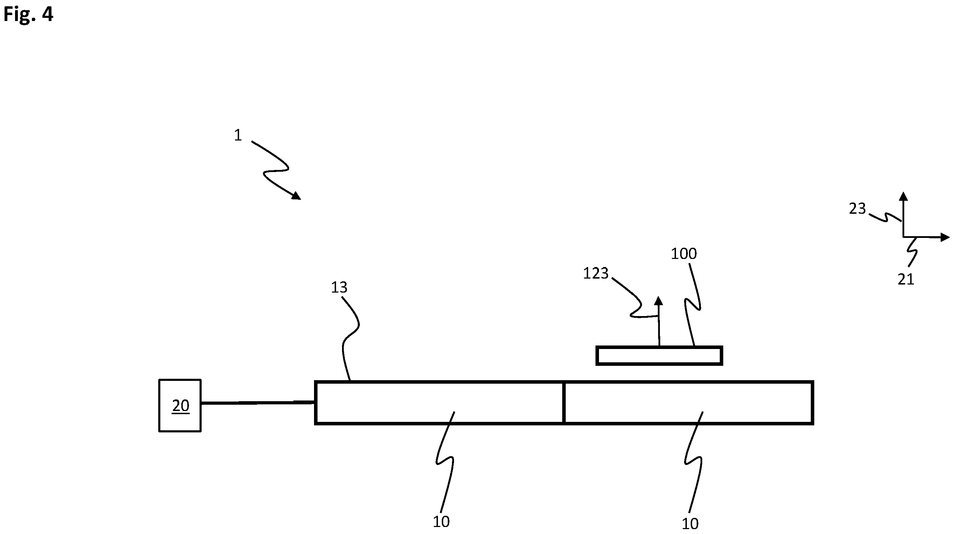

Figur 4 zeigt eine Seitenansicht auf ein Planarantriebssystem 1. Die Steuereinheit 20 ist wieder eingerichtet, mittels der Magnetfeldsensoren 14 eine Position des Läufermagnetfelds zu erfassen und mit einer aufgrund einer Bestromung der Spulenanordnungen 12 erwarteten Position zu vergleichen und aus einer Abweichung der Position von der erwarteten Position eine externe Bewegung in eine dritte externe Bewegungsrichtung 123 zu ermitteln. Die dritte externe Bewegungsrichtung 123 ist dabei in dieselbe Richtung orientiert wie eine zur ersten Richtung 21 und zweiten Richtung 22 senkrechte dritte Richtung 23. Die Abweichung kann wieder als Positionsschleppfehler oder als Kraft ermittelt werden. Der Positionsschleppfehler kann dabei direkt aus einer Messung einer Position der Magneteinheiten 114 mittels der Magnetfeldsensoren 14 abgeleitet werden. Die Kraft kann daraus bestimmt werden, welche Bestromung der Spulengruppen 12 notwendig ist, um den Läufer 100 in Position zu halten. Es wird mittels der Spulengruppen 12 dann also eine Kraft erzeugt, die der externen Bewegung entgegengerichtet ist.

Die Ausgestaltungen der Figuren 3 und 4 können auch kombiniert sein, so dass von einem Bediener des Planarantriebssystems ausgelöste Eingaben als Bewegungen des Läufers 100 in der ersten externen Bewegungsrichtung 121, der zweiten externen Bewegungsrichtung 122 und der dritten externen Bewegungsrichtung 123 erkannt werden können. Ferner kann vorgesehen sein, dass alternativ oder zusätzlich Rotationsbewegungen des Läufers 100 um eine Achse parallel zur ersten Richtung 21 und/oder zur zweiten Richtung 22 und/oder zur dritten Richtung 23 detektiert und als Eingabe aufgefasst werden. Auch dies kann mittels der Position der Magneteinheiten 114, ermittelt durch die Magnetfeldsensoren 14 erfolgen, wenn beispielsweise bei einer Rotation um die Achse parallel zur ersten Richtung 21 eine Magneteinheit 114 näher an das Statormodul 10 heranrückt und eine Magneteinheit 114 sich vom Statormodul 10 entfernt. Ferner kann auch hier die oben beschriebene Auswertung hinsichtlich der Kraft erfolgen, wobei hier mittels der Spulenanordnungen 12 eine zusätzliche Kraft auf den Läufer 100 erzeugt wird, die der Rotation entgegengerichtet ist.

Beispielsweise in der dritten Richtung 23 kann eine Detektion eines Positionsschleppfehlers wie folgt ausgestaltet sein. Ein Bediener des Planarantriebssystems drückt von oben auf den Läufer 100, der sich dadurch entgegen der dritten externen Bewegungsrichtung 123 bewegt. Der Läufer 100 wird also beispielsweise nach unten, also in Richtung des Statormoduls 10, aus seiner Position gedrückt. Dies wird als Positionsabweichung beziehungsweise Positionsschleppfehler in der dritten Richtung 23 detektiert. Nun kann der Strom in den Spulengruppen 12 angepasst werden, um den Läufer 100 wieder auf eine Sollhöhe zu bringen. Dies kann analog auch für die erste Richtung 21 und die zweite Richtung 22 erfolgen. Erfolgt die Eingabe in Form einer Berührung, wird eine Anpassung des Stroms in den Spulengruppen 12 nicht langfristig benötigt, da die Berührung nur eine kurze Zeit dauern kann. Nach dem Berühren würde durch den angepassten Strom und die jedoch nicht mehr durch das Drücken vorhandene Kraft auf den Läufer 100 erneut ein Positionsschleppfehler detektiert und der Strom in den Spulengruppen 12 würde erneut angepasst, so dass der Läufer wieder auf die Sollhöhe gebracht wird.

Alternativ wird jedoch nur der kurze Positionsschleppfehler durch das Drücken erfasst und der Strom nicht angepasst. Nach dem Beendigen des Drückens wird der Läufer 100 durch den bereits zuvor gestellten Strom der Spulengruppen 12 dann automatisch wieder auf die Sollhöhe gebracht.

Durch die zeitliche Erfassung eines vorhandenen Positionsschleppfehlers kann beispielweise ein unterschiedliches langes Berühren, beispielsweise ein Antippen im Unterschied zu längerem Drücken, detektiert werden. Ebenso kann über die Erfassung detektiert werden, ob ein Läufer 100 beispielweise beladen wurde. Stellt sich ein andauernder Positionsschleppfehler ein, der durch Anpassung des Stroms in den Spulengruppen 12 ausgeglichen werden muss, so kann diesem Positionsschleppfehler in Verbindung mit der zeitlichen Komponente ein Ereignis zugeordnet werden, beispielsweise, dass der Läufer 100 beladen ist.

Alternativ kann auch die gestellte Kraft ausgewertet werden. Eine gestellte Kraft entspricht dabei einer Verknüpfung von einer bestimmten Position des Läufers in der ersten Richtung 21 und/oder der zweiten Richtung 22 und/oder der dritten Richtung 23 (oder eine Kombination aus verschiedenen Positionen) und einem eingestellten Strom der Spulengruppen 12 im Einflussbereichs des Läufers 100. Beispielsweise kann ein zunächst leerer Läufer 100 mit einem Produkt beladen werden. Dies führt zu einem Positionsschleppfehler in der dritten Richtung 23. Mittels der Bestromung der Spulengruppen 12 wird eine neue Kraft eingestellt.

Somit kann, wie zuvor bereits beschrieben, ein kurzfristiger Positionsschleppfehler als Folge einer Eingabe über den Läufer 100 als auch eine langfristig gesteigerte gestellte Kraft detektiert und unterschieden werden, indem die Dauer der Veränderung des Stromes in den Spulengruppen 12 ausgewertet wird. Ist Beides erfüllt, kann daraus das Ereignis "Läufer 100 ist beladen" gewonnen werden.

Ein Positionsschleppfehler in der ersten Richtung 21 und/oder der zweiten Richtung 22 und/oder der dritten Richtung 23 (oder eine Kombination aus verschiedenen Positionsschleppfehlern) kann dann entsprechend auch einem Ereignis zugeordnet sein. Beispielswiese kann ein Positionsschleppfehler in der zweiten Richtung 22 bedeuten, dass der Läufer 100 angetippt wurde. Dieses erfasste Antippen des Läufers kann dann innerhalb der Steuereinheit 20 mit einem bestimmten Ereignis verknüpft sein, wie im Folgenden noch beispielhaft beschrieben wird.

Die in Figur 2 bis 4 vorgestellten Methoden zur Eingabedetektion können mittels der Steuereinheit 20 beliebigen Ereignissen zugeordnet werden, die entweder in der Steuereinheit 20 hinterlegt sind oder die ein Maschinenbediener in der Steuereinheit 20 zuvor festlegen kann. Diese Ereignisse können sowohl bestimmte Steuerungsbefehle für den Läufer 100 oder weitere Läufer 105 umfassen, als auch bestimmte Steuer- bzw. Programm- bzw. Programmierschritte innerhalb des in der Steuereinheit 20 laufenden Steuerungsprogramms umfassen, als auch bestimmte Handlungen oder Arbeitsprozesse von weiteren Maschinenelementen im Zusammenhang mit dem Planarantriebssystem 1 aber auch unabhängig davon auslösen. Beispielhaft sind im Folgenden eine Auswahl an erfassten Positionsschleppfehlern und diesen zugeordnete Ereignisse beschrieben. Diese Auflistung ist jedoch nicht abschließend und es gibt auch keine feste Zuordnung der beschriebenen Positionsschleppfehler und dem jeweiligen Ereignis. Jedwede Kombinationen und Ereignisse sind im Rahmen des erfindungsgemäßen Systems denkbar und vom Schutzumfang umfasst.

Ein Positionsschleppfehler in der dritten Richtung, welcher einen definierten Grenzwert überschreitet, kann beispielsweise dem Ereignis "Läufer 100 wurde im Zentrum angetippt" zugeordnet werden. Dieses Ereignis kann wiederum im Rahmen der Mensch-Maschinen-Interaktion einem Befehl zugeordnet werden wie beispielsweise den Läufer 100 um eine vorbestimmte Distanz in eine vorbestimmte Richtung zu verfahren, beispielsweise um einen Meter in die erste Richtung 21.

Eine länger als eine vorbestimmte Zeitspanne, beispielsweise drei Sekunden, in der ersten Richtung 21 wirkende Kraft kann beispielsweise dem Ereignis "Läufer 100 wird angeschoben" zugeordnet werden. Dieses Ereignis kann beispielsweise dem Befehl, "den Läufer 100 in die erste Richtung 21 zu bewegen", zugeordnet sein.

Ein positiver Positionsschleppfehler in einer Rotationsachse parallel zur zweiten Richtung 22 kann dem Ereignis "Läufer 100 wurde auf der rechten Hälfte angetippt" zugeordnet werden. Dieses Ereignis kann beispielsweise dem Befehl "Läufer 100 anhalten" zugeordnet sein, so dass der Läufer 100 anschließend nicht weiterbewegt wird.

Ein negativer Positionsschleppfehler in einer Rotationsachse parallel zur zweiten Richtung 22 kann dem Ereignis "Läufer 100 wurde auf der linken Hälfte angetippt" zugeordnet werden. Das Ereignis kann beispielsweise dem Befehl "Läufer 100 weiterbewegen" zugeordnet sein.

Eine dauerhaft (länger als eine vorbestimmte Zeitspanne, beispielswiese drei oder fünf Sekunden) wirkende Kraft entgegen der dritten Richtung 23 kann dem Ereignis "Läufer 100 wurde beladen" zugeordnet sein. Das Ereignis "Läufer 100 wurde beladen" kann mit dem Befehl "Der Läufer 100 soll an eine vorbestimmte Position des Planarantriebssystems 1 bewegt werden" verbunden werden.

Beliebige Positionsschleppfehler oder Kräfte können, gegebenenfalls in Kombination mit einer Auswertung einer Zeitdauer, beliebigen Ereignissen zugeordnet werden. Die Ereignisse können wiederum beliebigen Befehlen in der Kommunikation Mensch an Maschine zugeordnet werden. Der Läufer 100 wird somit als Eingabeinstrument zum flexibel programmierbarem Universalelement dieser Kommunikation.

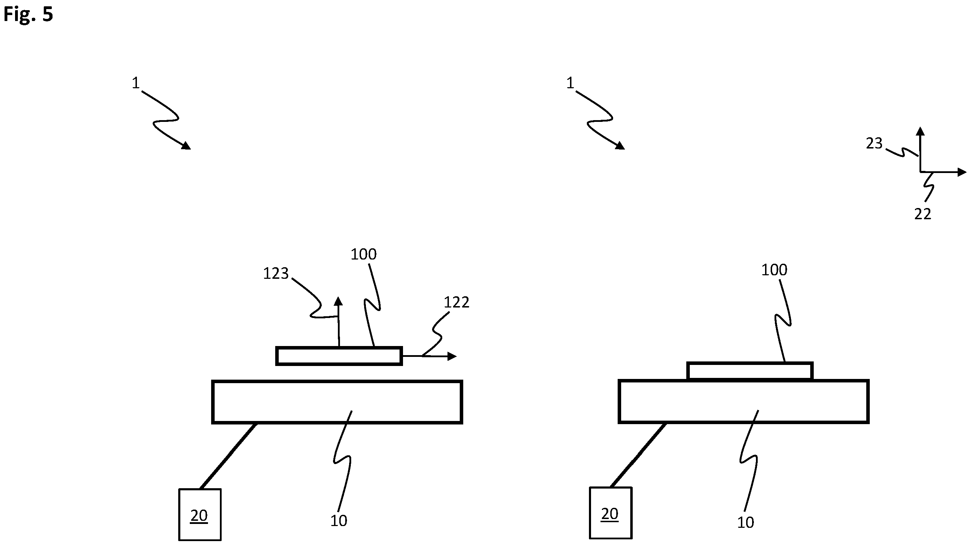

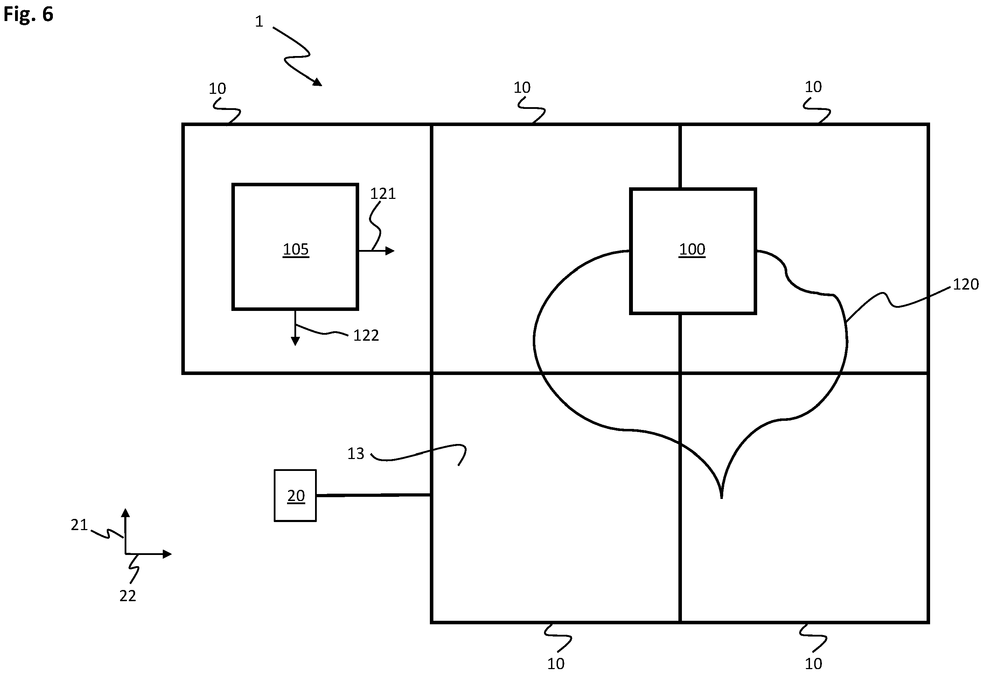

Figur 5 zeigt eine Seitenansicht eines Planarantriebssystems 1, bei dem eine Bewegung des Läufers 100 in der ersten externen Bewegungsrichtung 121 und/oder der dritten externen Bewegungsrichtung 123 von den Magnetfeldsensoren 14 detektiert wurde, die nicht durch eine Bestromung der Spulenanordnungen 12 verursacht wurde. Es kann auch eine Bewegung in der zweiten externen Bewegungsrichtung 122 detektiert werden. Dabei kann vorgesehen sein, dass diese Bewegung als Entnahmeversuch detektiert wird, also der Läufer 100 aus dem Planarantriebssystem 1 entfernt werden soll. Dann kann einerseits im Rahmen eines Diebstahlschutzes vorgesehen sein, dass die Steuereinheit 20 Steuerbefehle an das betreffende Statormodul 10 ausgibt derart, dass die Spulenanordnungen 12 so bestromt werden, dass der Läufer 100 zum Statormodul 10 hin bewegt und vom Statormodul 10 mit einer vorgegebenen Kraft angezogen wird, so dass ein Diebstahl verhindert werden kann. Dies ist in Figur 6 rechts angedeutet. Alternativ kann vorgesehen sein, dass im Betrieb die Entnahme des Läufers 100 gestattet ist und die Spulenanordnungen 12 derart bestromt werden, dass der Läufer 100 kraftlos geschaltet ist und ohne Überwindung einer Kraft entnommen werden kann. Es kann vorgesehen sein, dass der entnommene Läufer gleichzeitig vom Planarantriebssystem 1 softwareseitig abgemeldet wird, so dass die Steuereinheit 20 diesen Läufer 100 nicht mehr weiter betrachtet. Beide Alternativen können beispielsweise im Reaktionsschritt 204 ausgelöst werden.

Figur 6 zeigt eine Draufsicht auf ein Planarantriebssystem 1, das die im Zusammenhang mit den Figuren 1 bis 4 erläuterten Eingabemöglichkeiten des Läufers 100 als Eingabeinstrument umfasst. Dabei kann eine Bewegungsbahn 120 des Läufers 100 als externe Eingabe aufgezeichnet werden. Dies kann mit den im Zusammenhang mit der Figur 3 erläuterten Möglichkeiten, externe Bewegungen insbesondere in die erste externe Bewegungsrichtung 121 und der zweiten externen Bewegungsrichtung 122 erfolgen. Insbesondere kann vorgesehen sein, dass die Spulenanordnungen 12 derart bestromt werden, dass der Läufer 100 in Bezug auf Bewegungen in der ersten Richtung 21 und der zweiten Richtung 22 kraftlos geschaltet ist und über der Statorfläche 13 schwebt oder auf der Statorfläche 13 liegt. Anschließend wird der Läufer 100 händisch bewegt und mittels der Magnetfeldsensoren 14 das Magnetfeld der Magnetanordnungen 114 ermittelt und daraus die Bewegungsbahn 120 bestimmt. Anschließend können die Spulenanordnungen 12 derart bestromt werden, dass sich der Läufer 100 auf der Bewegungsbahn 120 bewegt. Der Läufer 100 wird also als Eingabeinstrument zur Bahnerfassung genutzt. Der zur Bahnerfassung genutzte Läufer 100 sowie beliebige weitere Läufer können die einmal erfasste Bahn im Nachgang abfahren. Ein Umschalten zwischen Bahnerfassungsmodus und dem normalen Betriebsmodus kann beispielsweise durch ein Antippen des Läufers 100 erfolgen und wie oben beschrieben erkannt werden.

Ferner ist in Figur 6 eine alternative Ausgestaltung dargestellt, bei der ein weiterer Läufer 105 als Eingabeinstrument verwendet werden kann. Der weitere Läufer 105 wird in der ersten externen Bewegungsrichtung 121 und der zweiten externen Bewegungsrichtung 122 durch einen Bediener des Planarantriebssystems 1 analog einem Joystick bewegt und die dadurch erfolgende Eingabe kann genutzt werden, um die Spulenanordnungen 12 derart zu bestromen, dass der Läufer 100 auf der Bewegungsbahn 120 bewegt wird.

Ebenfalls möglich ist, dass eine externe Bewegung des Läufers 100 oder des weiteren Läufers 105 in die erste externe Bewegungsrichtung 121 und/oder in die zweite externe Bewegungsrichtung 122 und/oder die dritte externe Bewegungsrichtung 123 erkannt wird, wobei dadurch eine vorgegebene Bewegung des Läufers 100 mittels Bestromung der Spulenanordnungen 12 ausgelöst wird.

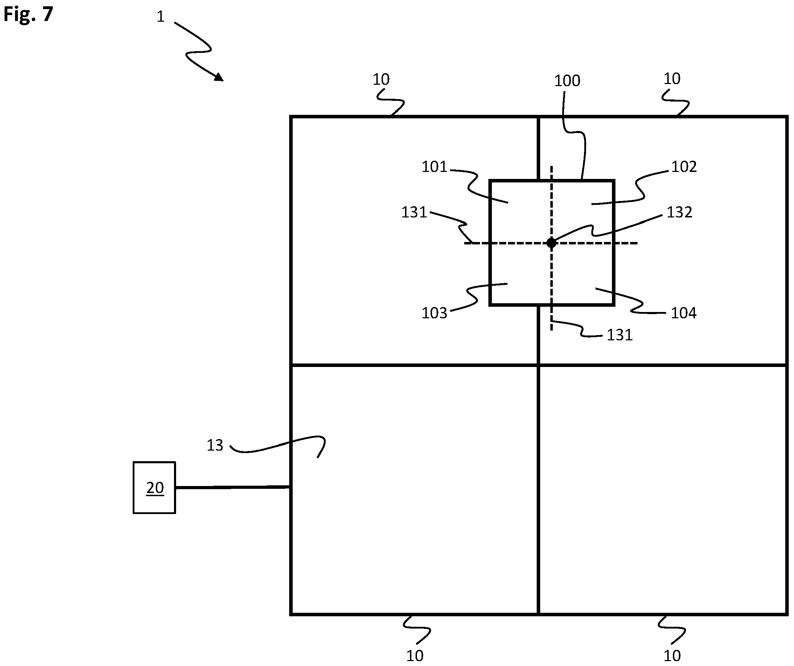

Figur 7 zeigt eine Draufsicht auf ein Planarantriebssystem 1, das weitere Eingabemöglichkeiten des Läufers 100 umfasst. Wenn der Läufer 100 oberhalb der Statorfläche 13 angeordnet ist, kann eine externe Eingabe dadurch erfolgen, dass der Läufer 100 um eine erste Achse 131 rotiert wird, wobei die erste Achse 131 parallel zur Statorfläche 13 liegt und damit für einen Läufer 100 zwei erste Achsen 131 definiert sind. Bereits eine Rotation um wenige Grad um die erste Achse 131 kann mittels der Magnetfeldsensoren 14 detektiert und als externe Eingabe identifiziert werden, insbesondere dann, wenn die Bestromung der Spulengruppen 12 derart erfolgt, dass der Läufer 100 parallel zur Statorfläche 13 ausgerichtet ist. Dabei kann beispielsweise vorgesehen sein, dass der Läufer 100 einen ersten Quadranten 101, einen zweiten Quadranten 102, einen dritten Quadranten 103 und einen vierten Quadranten 104 aufweist, wobei ein Antippen des Läufers 100 im ersten bis vierten Quadranten 101, 102, 103, 104 jeweils eine andere Rotation um die ersten Achsen 131 auslöst und so vier verschiedene Eingaben möglich sind. Ein Antippen im ersten Quadranten 101 kann beispielsweise als Eingabe, dass der Läufer 100 an eine erste vorgegebene Position im Planarantriebssystem 1 fahren soll und die Spulenanordnungen 12 entsprechend bestromt werden aufgefasst werden. Ein Antippen im zweiten Quadranten 102 kann beispielsweise als Eingabe, dass der Läufer 100 an eine zweite vorgegebene Position im Planarantriebssystem 1 fahren soll und die Spulenanordnungen 12 entsprechend bestromt werden aufgefasst werden. Ein Antippen im dritten Quadranten 103 kann beispielsweise als Eingabe, dass der Läufer 100 eine vorgegebene Strecke in eine vorgegebene Richtung fahren soll und die Spulenanordnungen 12 entsprechend bestromt werden aufgefasst werden. Ein Antippen im vierten Quadranten 104 kann beispielsweise als Eingabe, dass der Läufer 100 eine weitere vorgegebene Bewegung ausführen soll und die Spulenanordnungen 12 entsprechend bestromt werden aufgefasst werden. Selbstverständlich sind auch darüberhinausgehende vorgegebene Bewegungen möglich. Die Bewegungen können dabei während des Reaktionsschrittes entsprechend gesteuert werden.

Ebenfalls in Figur 7 dargestellt ist eine zweite Achse 132 senkrecht zur Statorfläche 13. Auch eine Rotation des Läufers 100 um die zweite Achse 132, die nicht durch eine Bestromung der Spulenanordnungen 12 ausgelöst wurde, kann als Eingabe aufgefasst werden und entsprechend der beschriebenen Methoden verarbeitet werden.

Die im Zusammenhang mit den Fig. 6 und 7 erläuterten Eingaben können kombiniert werden, indem beispielsweise zunächst mit einem Antippen eines der ersten bis vierten Quadranten 101, 102, 103, 104 oder mit einem mittigen Antippen des Läufers 100 der im Zusammenhang mit Fig. 6 erläuterte Modus aktiviert wird und dann die Spulenanordnungen 12 derart bestromt werden, dass der Läufer 100 in Bezug auf Bewegungen in der ersten Richtung 21 und der zweiten Richtung 22 kraftlos geschaltet ist und über der Statorfläche 13 schwebt oder auf der Statorfläche 13 liegt. Nun kann der Läufer 100 als Eingabeinstrument zur Eingabe der Bewegungsbahn 120 dienen und anschließend mit einem weiteren Antippen eines der ersten bis vierten Quadranten 101, 102, 103, 104 oder mit einem mittigen Antippen des Läufers 100 der im Zusammenhang mit Fig. 6 erläuterte Modus deaktiviert werden. Anschließend kann der Läufer 100 wieder in der ersten Richtung 21 und/oder der zweiten Richtung 22 mittels der Bestromung der Spulengruppen 12 bewegt werden. Der im Zusammenhang mit Fig. 6 erläuterte Modus kann beispielsweise als Anlernmodus bezeichnet werden.

Durch die im Zusammenhang mit den Fig. 3 bis 7 erläuterten Eingabemethoden mittels eines Läufers 100, 105 des Planarantriebssystems als Eingabeinstrument ist es möglich, Bewegungen des Läufers 100 zu steuern, ohne dafür Programmcode für die Steuereinheit 20 schreiben zu müssen. Dadurch wird die Bedienung des Planarantriebssystems 1 vereinfacht, da die Läufer 100 des Planarantriebssystems 1 beispielsweise mit intuitiven Gesten bzw. Handlungen des Maschinenbedieners gesteuert werden können.

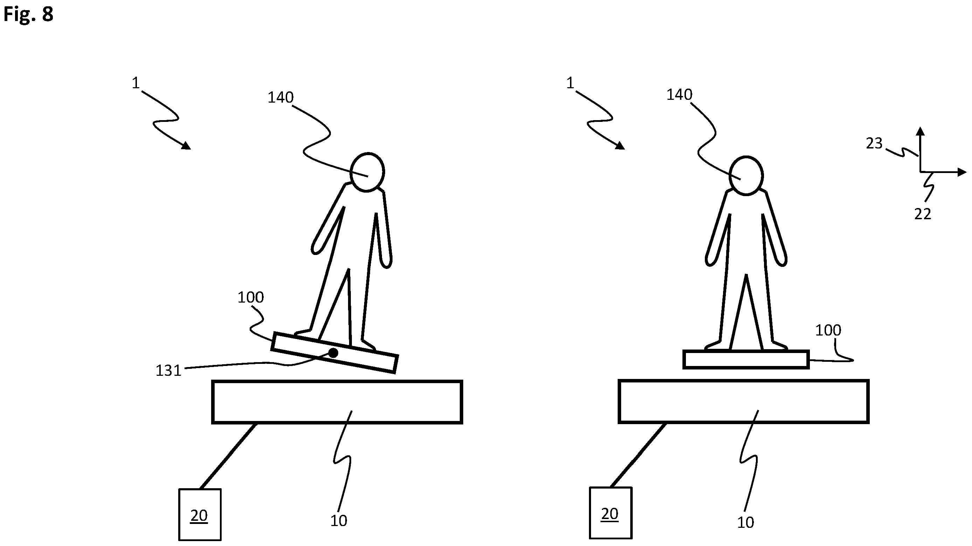

Figur 8 zeigt eine Seitenansicht eines Planarantriebssystems 1, bei dem der Läufer 100 zum Transport einer Person 140 genutzt werden kann. Das bedeutet insbesondere, dass die Wechselwirkung zwischen dem Läufermagnetfeld und dem Antriebsmagnetfeld groß genug ist, um das Gewicht der Person 140 zu tragen. Die Person 140 kann durch Gewichtsverlagerung den Läufer 100 steuern. Im linken Abschnitt der Figur 8 ist die Person 140 mit nach rechts verlagertem Gewicht dargestellt, so dass der Läufer 100 nach rechts geneigt und damit um einige Grad um eine erste Achse 131 rotiert ist. Dies kann als Abweichung der mittels der Magnetfeldsensoren 14 ermittelten Position mit der durch die Bestromung der Spulenanordnungen 12 erwarteten Position des Läufers 100 mit den bereits beschriebenen Methoden als Eingabe erkannt werden. Die Eingabe kann dabei das Signal umfassen, dass der Läufer 100 nach rechts, also in die Richtung der Gewichtsverlagerung der Person 140 bewegt und die Spulenanordnungen 12 entsprechend bestromt werden sollen. Für den Fall, dass mehrere Läufer 100 vorgesehen sind, kann ferner vorgesehen sein, die Bestromung der Spulenanordnungen 12 derart zu steuern, dass Kollisionen der Läufer 100 ausgeschlossen sind, insbesondere Kollisionen mehrerer Läufer 100 mit Personen 140 ausgeschlossen sind.

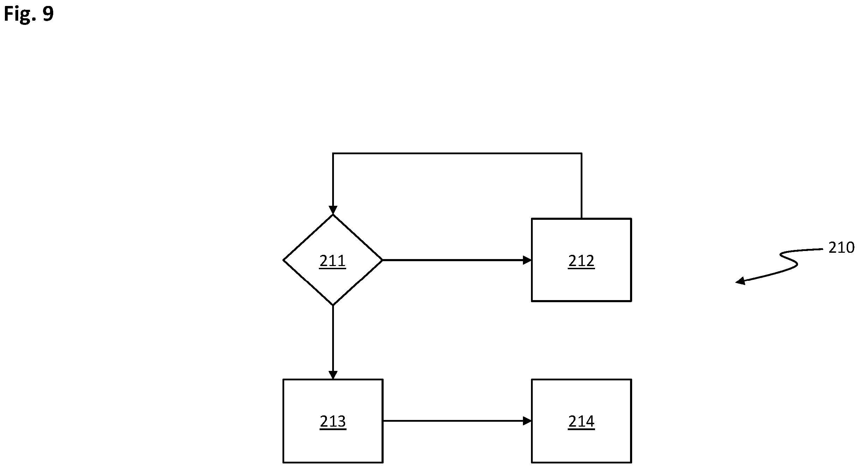

Figur 9 zeigt ein zweites Ablaufdiagramm 210 eines Verfahrens zum Betreiben eines Planarantriebssystems 1, bei dem eine Ausgabe mittels eines Läufers 100 erfolgt. In einem weiteren Entscheidungsschritt 211 wird bestimmt, dass eine Ausgabe erfolgen soll. Dies kann beispielsweise dann der Fall sein, wenn ein auf dem Läufer 100 transportiertes Produkt als beschädigt erkannt wird, beispielsweise mittels Kameras. Soll keine Ausgabe erfolgen, wird ein weiterer Regelbetrieb 212 ohne Ausgabe durchgeführt und nach einer vorgegebenen Zeit wieder der weitere Entscheidungsschritt 211 durchgeführt. Im Ausgabeschritt 213 wird die Ausgabe durchgeführt, indem die Spulenanordnungen 12 derart bestromt werden, dass der Läufer 100 eine vorgegebene Bewegung durchführt. In einem optionalen weiteren Reaktionsschritt 214 kann dann eine Reaktion erfolgen, wobei die Reaktion eine zusätzliche Bestromung der Antriebsspulen 12 derart, dass eine bestimmte Bewegung des Läufers 100 ausgeführt wird, sein kann. Dies kann beispielsweise genutzt werden, wenn ein defektes Produkt zunächst signalisiert und dann mittels des Läufers 100 aus dem Produktionsprozess ausgeschleust werden soll.

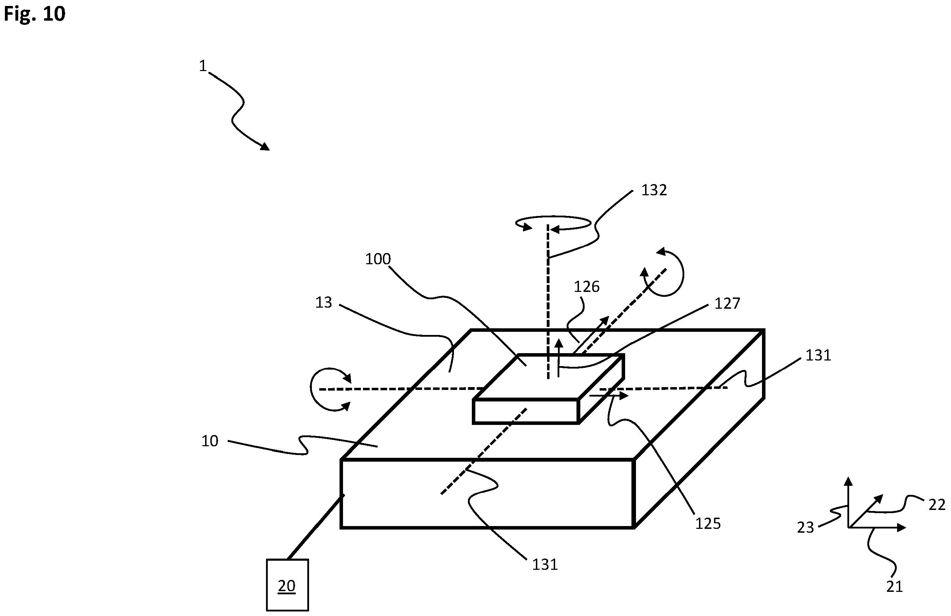

Figur 10 zeigt eine isometrische Ansicht eines Planarantriebssystems 1, bei dem der Ausgabeschritt 213 durchgeführt wird. Dabei kann vorgesehen sein, dass die Ausgabe dadurch erfolgt, dass der Läufer 100 parallel zur Statorfläche 13, also in einer ersten Bewegungsrichtung 125 parallel zur ersten Richtung 21 und/oder in einer zweiten Bewegungsrichtung 126 parallel zur zweiten Richtung 22 bewegt wird. Ebenfalls möglich sind Bewegungen, die eine Überlagerung der ersten Bewegungsrichtung 125 und der zweiten Bewegungsrichtung 126 umfassen. Insbesondere kann die vorgegebene Bewegung des Läufers 100 bei der Ausgabe eine Hin-und-Her-Bewegung in einer Richtung parallel zur Statorfläche 13, also in der ersten Richtung 21 oder der zweiten Richtung 22 oder einer Überlagerung der ersten Richtung 21 und der zweiten Richtung 22 sein. Alternativ oder zusätzlich kann die Ausgabe dadurch erfolgen, dass der Läufer 100 senkrecht zur Statorfläche 13, also in einer dritten Bewegungsrichtung 127 parallel zur dritten Richtung 23 bewegt wird. Insbesondere kann vorgesehen sein, dass diese Bewegung des Läufers 100 bei der Ausgabe eine Hin-und-Her-Bewegung in der dritten Richtung 23 senkrecht zur Statorfläche 13 ist. Alternativ oder zusätzlich kann vorgesehen sein, dass die vorgegebene Bewegung des Läufers 100 bei der Ausgabe eine Rotationsschwingungsbewegung um eine erste Achse 131 parallel zur Statorfläche 13 umfasst. Alternativ oder zusätzlich kann vorgesehen sein, dass die vorgegebene Bewegung des Läufers 100 bei der Ausgabe eine Rotationsschwingungsbewegung um eine zweite Achse 132 senkrecht zur Statorfläche 13 umfasst. Diese Bewegungen können jeweils optisch durch eine Bedienperson wahrgenommen werden.

Alle derart ausgeführten Bewegungen des Läufers 100 als Ausgabeinstrument können im Sinne einer Konvention zur Maschine-Mensch-Kommunikation als Signalisierung eines bestimmten Sachverhaltes festgelegt werden. Die Ausgabe umfasst also die Signalisierung des Sachverhalts. Die Sachverhalte, also die Verknüpfung eines bestimmten Ereignisses innerhalb des Steuerungsablaufs und/oder ein bestimmter Zustand des Planarantriebssystems oder seiner Komponenten können entweder in der Steuereinheit 20 hinterlegt sein oder die ein Maschinenbediener kann diese Verknüpfung zuvor in der Steuereinheit 20 festlegen.

Beispielsweise kann eine Bewegung des Läufers 100 in der dritten Richtung 23 abwechselnd nach oben, also von den Statormodulen 10 weg, und nach unten, also zu den Statormodulen 10 hin, bedeuten, dass dieser Läufer 100 nicht beladen werden soll. Eine Hin-und-Her-Bewegung des Läufers 100 in der ersten Richtung 21 und/oder der zweiten Richtung 22 kann die Ausgabe einer Fehlermeldung für diesen Läufer umfassen. Eine Bewegung des Läufers 100 im Kreis kann beispielsweise bedeuten, dass eine Reinigung des Läufers 100 durchgeführt werden sollte.

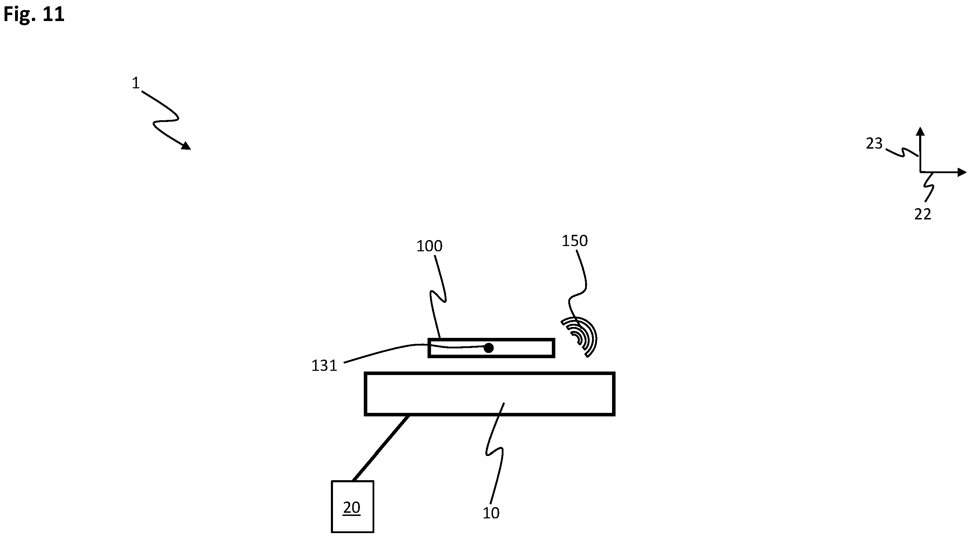

Figur 11 zeigt eine Seitenansicht eines Planarantriebssystems 1, bei dem eine Ausgabe mittels der Rotationsschwingungsbewegung um die erste Achse 131 erfolgt, wobei die Rotationsschwingung eine Frequenz aufweist, derart dass durch die Rotationsschwingung ein hörbarer Ton, insbesondere ein Ton im Frequenzbereich zwischen 20 Hertz und 20 Kilohertz, entsteht. Dieser Ton kann dann als Schallwellen 150 ausgegeben werden. Somit ist eine akustische Ausgabe möglich. Mittels der akustischen Ausgabe können ebenfalls im Sinne einer Konvention zur Maschine-Mensch-Kommunikation bestimmte Sachverhalte signalisiert werden. Insbesondere kann vorgesehen sein, dass die Spulengruppen 12 derart bestromt werden, dass die entstehende Rotationsschwingungsbewegung Schallwellen 150 erzeugt.

### Bezugszeichenliste

- 1: Planarantriebssystem
- 10: Statormodul
- 11: Statoreinheit
- 12: Spulenanordnung
- 13: Statorfläche
- 14: Magnetfeldsensor
- 20: Steuereinheit
- 21: erste Richtung
- 22: zweite Richtung
- 23: dritte Richtung
- 25: Eingabeeinheit
- 26: Ausgabeeinheit
- 100: Läufer
- 101: erster Quadrant
- 102: zweiter Quadrant
- 103: dritter Quadrant
- 104: vierter Quadrant
- 105: weiterer Läufer
- 114: Magneteinheit
- 120: Bewegungsbahn
- 121: erste externe Bewegungsrichtung
- 122: zweite externe Bewegungsrichtung
- 123: dritte externe Bewegungsrichtung
- 125: erste Bewegungsrichtung
- 126: zweite Bewegungsrichtung
- 127: dritte Bewegungsrichtung
- 131: erste Achse
- 132: zweite Achse
- 140: Person
- 150: Schallwellen
- 200: erstes Ablaufdiagramm
- 201: Entscheidungsschritt
- 202: Regelbetrieb
- 203: Erkennungsschritt
- 204: Reaktionsschritt
- 210: zweites Ablaufdiagramm
- 211: weiterer Entscheidungsschritt
- 212: weiterer Regelbetrieb
- 213: Ausgabeschritt
- 214: weiterer Reaktionsschritt

## Patentansprüche

1. Verfahren zum Betreiben eines Planarantriebssystems (1),
wobei das Planarantriebssystem (1) zumindest ein Statormodul (10) und einen Läufer (100) aufweist,
wobei das Statormodul (10) zumindest eine Statoreinheit (11) mit zumindest einer Spulenanordnung (12) umfasst, wobei die Spulenanordnung (12) bestromt werden kann und eingerichtet ist, aufgrund einer Bestromung ein Statormagnetfeld oberhalb einer Statorfläche (13) zu erzeugen,
wobei der Läufer (100) eine Magnetanordnung (114) aufweist und mittels einer Wechselwirkung zwischen dem Statormagnetfeld und einem Läufermagnetfeld der Magnetanordnung (114) oberhalb der Statorfläche (13) bewegt werden kann,
wobei der Läufer (100) als Eingabeinstrument verwendet werden kann,
**dadurch gekennzeichnet, dass**
das Statormodul (10) zumindest einen Magnetfeldsensor (14) aufweist, wobei der Magnetfeldsensor (14) das Läufermagnetfeld zur Bestimmung der Position des Läufers erfasst,
eine Eingabe dadurch erkannt wird, dass eine aufgrund einer Bestromung der Spulenanordnungen (12) erwarteten Position des Läufers mit einer erfasste Position des Läufers verglichen und eine Abweichung der Position von der erwarteten Position als Positionsschleppfehler bewertet sowie zeitlich erfasst wird, und /oder dass die Höhe einer zusätzlichen Bestromung der Spulenanordnungen (12), die erfolgt, um die aufgrund der Bestromung der Spulenanordnungen (12) erwarteten Position des Läufers einzuhalten, ermittelt und als externe Kraft bewertet sowie zeitlich erfasst wird, wobei der Positionsschleppfehler und/ oder die externe Kraft in Kombination mit der jeweiligen Zeitdauer als externe Bewegung bewertet und einem vorgegebenen Eingabe-Ereignis zugeordnet wird.

2. Verfahren nach Anspruch 1, wobei beim Vergleich zwischen der Position und der erwarteten Position eine Bewegung parallel zur Statorfläche (13) erkannt wird.

3. Verfahren nach Anspruch 1 oder 2, wobei beim Vergleich zwischen der Position und der erwarteten Position eine Bewegung senkrecht zur Statorfläche (13) erkannt wird.

4. Verfahren nach einem der Ansprüche 1 bis 3, wobei beim Vergleich zwischen der Position und der erwarteten Position eine Rotation des Läufers (100) um eine erste Achse (131) parallel zur Statorfläche (13) erkannt wird.

5. Verfahren nach einem der Ansprüche 1 bis 4, wobei beim Vergleich zwischen der Position und der erwarteten Position eine Rotation des Läufers (100) um eine zweite Achse (132) senkrecht zur Statorfläche (13) erkannt wird.

6. Verfahren nach einem der Ansprüche 1 bis 5, wobei anhand des Eingabe-Ereignisses eine oder mehrere Spulenanordnungen (12) derart bestromt werden, dass der Läufer (100) und/oder ein weiterer Läufer (105) eine vorbestimmte Bewegung durchführt.

7. Verfahren nach Anspruch 6, wobei anhand der externen Bewegung des Läufers (100) ermittelt wird, dass der Läufer (100) von der Statorfläche (13) entfernt wird, wobei die Bestromung der Spulenanordnung (12) derart erfolgt, dass der Läufer (100) zur Statorfläche (13) hinbewegt und mit einer magnetischen Kraft angezogen wird.

8. Verfahren nach Anspruch 6, wobei anhand der externen Bewegung des Läufers (100) ermittelt wird, dass der Läufer (100) von der Statorfläche (13) entfernt wird, wobei die Bestromung der Spulenanordnungen (12) derart erfolgt, dass der Läufer (100) in eine erste Richtung (21), eine zweite Richtung (22) und eine dritte Richtung (23) kraftlos geschaltet wird.

9. Verfahren nach einem der Ansprüche 1 bis 8, wobei der Läufer (100) zusätzlich als Ausgabeinstrument verwendet werden kann, wobei eine Ausgabe über eine vorgegebene Bewegung des Läufers (100) erfolgt, wobei die Spulenanordnungen (12) derart bestromt werden, dass sich der Läufer (100) wie durch die vorgegebene Bewegung definiert bewegt.

10. Verfahren nach Anspruch 9, wobei die vorgegebene Bewegung des Läufers (100) bei der Ausgabe eine Hin-und-Her-Bewegung in einer Richtung parallel zur Statorfläche (13) umfasst.

11. Verfahren nach Anspruch 8 oder 9, wobei die vorgegebene Bewegung des Läufers (100) bei der Ausgabe eine Hin-und-Her-Bewegung in einer Richtung senkrecht zur Statorfläche (13) umfasst.

12. Verfahren nach einem der Ansprüche 9 bis 11, wobei die vorgegebene Bewegung des Läufers (100) bei der Ausgabe eine Rotationsschwingungsbewegung um eine erste Achse (131) parallel zur Statorfläche (13) umfasst.

13. Verfahren nach Anspruch 12, wobei die Rotationsschwingung eine Frequenz aufweist, derart dass durch die Rotationsschwingung ein hörbarer Ton, insbesondere ein Ton im Frequenzbereich zwischen 20 Hertz und 20 Kilohertz, entsteht.

14. Verfahren nach einem der Ansprüche 9 bis 13, wobei die vorgegebene Bewegung des Läufers (100) bei der Ausgabe eine Rotationsschwingungsbewegung um eine zweite Achse (132) senkrecht zur Statorfläche (13) umfasst.

15. Planarantriebssystem (1) mit zumindest einem Statormodul (10) und einem Läufer (100), wobei das Statormodul (10) zumindest eine Statoreinheit (11) mit zumindest einer Spulenanordnung (12) umfasst, wobei die Spulenanordnung (12) bestromt werden kann und eingerichtet ist, aufgrund einer Bestromung ein Statormagnetfeld oberhalb einer Statorfläche (13) zu erzeugen, wobei das Statormodul (10) zumindest einen Magnetfeldsensor (14) umfasst, wobei der Läufer (100) eine Magnetanordnung (114) aufweist und mittels einer Wechselwirkung zwischen dem Statormagnetfeld und einem Läufermagnetfeld der Magnetanordnung (114) oberhalb der Statorfläche (13) bewegt werden kann, wobei der Läufer (100) als Eingabeinstrument verwendet werden kann, wobei eine Steuereinheit (20) eingerichtet ist, das Verfahren nach einem der Ansprüche 1 bis 14 auszuführen.

## Claims

1. A method for operating a planar drive system (1),
the planar drive system (1) comprising at least a stator module (10) and a rotor (100), the stator module (10) comprising at least a stator assembly (11) having at least one coil arrangement (12), the coil arrangement (12) being capable of being energized and being set up to generate a stator magnetic field above a stator surface (13) due to an energization,
wherein the rotor (100) comprises a magnet arrangement (114) and may be moved above the stator surface (13) with the aid of an interaction between the stator magnetic field and a rotor magnetic field of the magnet arrangement (114), wherein
the rotor (100) may be used as an input device,
**characterized in that**
the stator module (10) comprises at least a magnetic field sensor (14), wherein the magnetic field sensor (14) detects the rotor magnetic field in order to determine the position of the rotor,
wherein an input is detected by comparing a position of the rotor expected on the basis of a energization of the coil arrangements (12) to a detected position of the rotor, and a deviation of the position from the expected position is evaluated as a position drag error and detected over time, and/or that the amount of an additional energization of the coil arrangements (12), which is carried out in order to maintain the position of the rotor to be expected due to the energization of the coil arrangements (12), is determined and evaluated as an external force and detected over time, wherein the position drag error and/or the external force is evaluated as an external movement in combination with the respective time duration and is assigned to a predetermined input event.

2. The method according to claim 1, wherein a movement parallel to the stator surface (13) is detected when comparing the position and the expected position.

3. The method according to claim 1 or 2, wherein a movement perpendicular to the stator surface (13) is detected when comparing the position and the expected position.

4. The method according to any one of claims 1 to 3, wherein a rotation of the rotor (100) about a first axis (131) in parallel to the stator surface (13) is detected when comparing the position and the expected position.

5. The method according to any one of claims 1 to 4, wherein a rotation of the rotor (100) about a second axis (132) perpendicular to the stator surface (13) is detected when comparing the position and the expected position.

6. The method according to any one of claims 1 to 5, wherein the input event is used to energize one or more coil arrangements (12) in such a way that the rotor (100) and/or a further rotor (105) carries out a predetermined movement.

7. The method according to claim 6, wherein the external movement of the rotor (100) is used to determine that the rotor (100) removed from the stator surface (13), wherein the energization of the coil assembly (12) is such that the rotor (100) is moved toward the stator surface (13) and is attracted by a magnetic force.

8. The method according to claim 6, wherein the external movement of the rotor (100) is used to determine that the rotor (100) is being removed from the stator surface (13), wherein the energization of the coil arrangements (12) is such that the rotor (100) is forcelessly switched in a first direction (21), a second direction (22), and a third direction (23).

9. The method according to any one of claims 1 to 8, wherein the rotor (100) may be additionally used as an output device, wherein an output is provided via a predetermined movement of the rotor (100), wherein the coil arrangements (12) are energized in such a way that the rotor (100) moves as defined by the predetermined movement.

10. The method according to claim 9, wherein the predetermined movement of the rotor (100) during the output comprises a back-and-forth movement in a direction parallel to the stator surface (13).

11. The method according to claim 8 or 9, wherein the predetermined movement of the rotor (100) during the output comprises a back-and-forth movement in a direction perpendicular to the stator surface (13).

12. The method according to any one of claims 9 to 11, wherein the predetermined movement of the rotor (100) in the output comprises a rotational oscillatory movement about a first axis (131) parallel to the stator surface (13).

13. The method according to claim 12, wherein the rotational oscillation comprises a frequency such that the rotational oscillation produces an audible sound, particularly a sound in the frequency range between 20 hertz and 20 kilohertz.

14. The method according to any one of claims 9 to 13, wherein the predetermined movement of the rotor (100) in the output comprises a rotational oscillatory movement about a second axis (132) perpendicular to the stator surface (13).

15. A planar drive system (1) having at least a stator module (10) and a rotor (100), wherein the stator module (10) comprises at least a stator assembly (11) with at least a coil arrangement (12), wherein the coil arrangement (12) may be energized and is set up to generate a stator magnetic field above a stator surface (13) due to an energization, wherein the stator module (10) comprises at least one magnetic field sensor (14), wherein the rotor (100) comprises a magnet arrangement (114) and may be moved above the stator surface (13) with the aid of an interaction between the stator magnetic field and a rotor magnetic field of the magnet arrangement (114), wherein the rotor (100) may be used as an input device, wherein a controller (20) is set up to carry out the method according to any one of claims 1 to 14.

## Revendications

1. Procédé de fonctionnement d'un système d'entraînement planaire (1),
le système d'entraînement planaire (1) comportant au moins un module formant stator (10) et un rotor (100), le module formant stator (10) comprenant au moins une unité de stator (11) pourvue d'au moins un ensemble de bobines (12), l'ensemble de bobines (12) pouvant être alimenté en courant et étant conçu pour générer un champ magnétique de stator au-dessus d'une surface de stator (13) en raison de l'alimentation en courant,
le rotor (100) comportant un ensemble d'aimants (114) et pouvant être déplacé au-dessus de la surface de stator (13) par interaction entre le champ magnétique de stator et un champ magnétique de rotor de l'ensemble d'aimants (114),
le rotor (100) pouvant être utilisé comme instrument d'entrée,
**caractérisé en ce que**
le module formant stator (10) comporte au moins un capteur de champ magnétique (14), le capteur de champ magnétique (14) détectant le champ magnétique de rotor afin de déterminer la position du rotor,
une entrée est détectée par comparaison d'une position du rotor, qui est attendue en raison de l'alimentation en courant des ensembles de bobines (12), à une position détectée du rotor et par évaluation d'un écart entre la position et la position attendue comme une erreur de poursuite de position et par acquisition de celle-ci dans le temps, et/ou par détermination du niveau d'une alimentation en courant supplémentaire des ensembles de bobines (12) qui est effectuée pour maintenir la position attendue du rotor en raison de l'alimentation en courant de l'ensemble de bobines (12) et qui est évaluée comme force extérieure et acquise dans le temps, l'erreur de poursuite de position et/ou la force extérieure étant évaluées, en combinaison avec la durée respective, comme un mouvement extérieur et associées à un événement d'entrée spécifié.

2. Procédé selon la revendication 1, un mouvement parallèle à la surface de stator (13) étant détecté lors de la comparaison de la position et de la position attendue.

3. Procédé selon la revendication 1 ou 2, un mouvement perpendiculaire à la surface de stator (13) étant détecté lors de la comparaison de la position à la position attendue.

4. Procédé selon l'une des revendications 1 à 3, une rotation du rotor (100) sur un premier axe (131) parallèle à la surface de stator (13) étant détectée lors de la comparaison de la position à la position attendue.

5. Procédé selon l'une des revendications 1 à 4, une rotation du rotor (100) sur un deuxième axe (132) perpendiculaire à la surface de stator (13) étant détectée lors de la comparaison de la position à la position attendue.

6. Procédé selon l'une des revendications 1 à 5, un ou plusieurs ensembles de bobines (12) étant alimentés en courant sur la base de l'événement d'entrée de manière à ce que le rotor (100) et/ou un autre rotor (105) effectue un mouvement prédéterminé.

7. Procédé selon la revendication 6, une détermination que le rotor (100) est retiré de la surface de stator (13) étant effectuée sur la base du mouvement extérieur du rotor (100), l'ensemble de bobines (12) étant alimenté en courant de manière à ce que le rotor (100) soit déplacé vers la surface de stator (13) et soit attiré par une force magnétique.

8. Procédé selon la revendication 6, une détermination que le rotor (100) est retiré de la surface de stator (13) étant effectuée sur la base du mouvement extérieur du rotor (100), les ensembles de bobines (12) étant alimentés en courant de manière à ce que le rotor (100) soit commuté sans alimentation en courant dans une première direction (21), une deuxième direction (22) et une troisième direction (23).

9. Procédé selon l'une des revendications 1 à 8, le rotor (100) pouvant également être utilisé comme instrument de sortie, une sortie étant effectuée par un mouvement spécifié du rotor (100), les ensembles de bobines (12) étant alimentés en courant de manière à ce que le rotor (100) se déplace de la façon définie par le mouvement spécifié.

10. Procédé selon la revendication 9, le mouvement spécifié du rotor (100) lors de la sortie comprenant un mouvement alternatif dans une direction parallèle à la surface de stator (13).

11. Procédé selon la revendication 8 ou 9, le mouvement spécifié du rotor (100) lors de la sortie comprenant un mouvement alternatif dans une direction perpendiculaire à la surface de stator (13).

12. Procédé selon l'une des revendications 9 à 11, le mouvement spécifié du rotor (100) lors de la sortie comprenant un mouvement d'oscillation en rotation sur un premier axe (131) parallèle à la surface de stator (13) .

13. Procédé selon la revendication 12, l'oscillation en rotation ayant une fréquence telle que l'oscillation en rotation produit une tonalité audible, en particulier une tonalité dans la gamme de fréquences comprise entre 20 hertz et 20 kilohertz.

14. Procédé selon l'une des revendications 9 à 13, le mouvement spécifié du rotor (100) lors de la sortie comprenant un mouvement d'oscillation en rotation sur un deuxième axe (132) perpendiculaire à la surface de stator (13).

15. Système d'entraînement planaire (1) comprenant au moins un module formant stator (10) et un rotor (100), le module formant stator (10) comprenant au moins une unité de stator (11) pourvue d'au moins un ensemble de bobines (12), l'ensemble de bobines (12) pouvant être alimenté en courant et étant conçu pour générer un champ magnétique de stator au-dessus d'une surface de stator (13) en raison de l'alimentation en courant, le module formant stator (10) comprenant au moins un capteur de champ magnétique (14), le rotor (100) comportant un ensemble d'aimants (114) et pouvant être déplacé au-dessus de la surface de stator (13) par interaction entre le champ magnétique de stator et un champ magnétique de rotor de l'ensemble d'aimants (114), le rotor (100) pouvant être utilisé comme instrument d'entrée, une unité de commande (20) étant conçue pour mettre en œuvre le procédé selon l'une des revendications 1 à 14.
